# EUROPEAN PATENT SPECIFICATION

(11) **EP 2 075 898 B1**
(45) Date of publication and mention of the grant of the patent: **03.12.2014**
(21) Application number: 08171650.8
(22) Date of filing: 15.12.2008
(51) Int. Cl.: H02K 15/03, H02K 1/27

(54) **Permanent magnet assembly and method of manufacturing same**
Permanentmagnetanordnung und Herstellungsverfahren dafür
Ensemble d'aimants permanents et son procédé de fabrication

(30) Priority: 31.12.2007 US 967747
(43) Date of publication of application: 01.07.2009
(73) Proprietor: General Electric Company, Schenectady, NY 12345 (US)
(72) Inventor: Jansen, Patrick Lee, Scotia, NY 12302 (US)
(74) Representative: Bedford, Grant Richard

(56) References cited:
- EP-A- 1 990 811
- DE-A1-102004 042 927
- DE-A1-102005 040 389
- US-A- 4 792 712

## Description

The field of the invention relates generally to permanent magnet assemblies, and more particularly, to permanent magnet assemblies and methods of manufacturing the same for use in electric machines.

Some known electric machines, e.g., those used with electric utility class wind generators and other applications, use large diameter rotors (i.e., rotors having a diameter of 0.61 m (two feet) or greater). One example of such an electric machine is a 2-10 megawatt, medium speed (e.g., 100-400 rpm) permanent magnet generator for wind turbines. Known large diameter rotors generally include a plurality of permanent magnet assemblies. At least some known permanent magnet assemblies are formed from multiple magnetic blocks that are secured to the rotor. However, known magnetic blocks, which are typically made from Neodymium Iron Boron (NdFeB), may not be adequately protected from the environment, and as such, over time such magnets may be vulnerable to corrosion. Corroded magnetic blocks may flake, crack, crumble, or otherwise degrade. Corrosion of the magnetic blocks may adversely reduce the reliability and life of the electric machine.

In some known machines, the magnetic blocks are coated with a thin protective layer. For example, the magnetic blocks can be coated with approximately 10-30 micrometers of an epoxy or nickel plating. Although such coatings generally facilitate preventing corrosion to the magnets, applying the thin protective layer to the magnetic blocks also increases the production costs. Moreover, the protective layer may be easily damaged during handling of the magnetic blocks and more particularly, may be damaged during assembly of the electric machine (e.g., attaching the magnetic blocks to the rotor). The damaged portions of the layer may leave the magnetic blocks susceptible to corrosion. Thus, the thin protective layers that are sometimes used, may be inadequate to protect the magnetic blocks from corrosion.

Within at least some large diameter machines, some magnetic blocks are covered with plastic across all of their outwardly-facing surfaces. However, in such embodiments, the surface of the magnetic blocks adapted for face-to-face engagement with the rotor is left uncovered because the plastic may adversely effect the magnetic flux between the magnetic blocks and the rotor. As a result, the uncovered surface is vulnerable to corrosion.

In small diameter machines (i.e., machines having a diameter less than 0,61 m (two feet)), a sealed metallic retaining can or ring is often used to secure the magnetic blocks in position, as well as to provide additional corrosion protection. Such retaining cans and rings are not feasible for use in large diameter machines as the cans and rings may be easily damaged during their installation thereby making them difficult to install on large diameter machines. Within at least some small diameter machines, the magnetic blocks are secured directly to the rotor using fiberglass banding. However, such banding generally is not used with large diameter rotors because it takes a long time for the fiberglass to cure. In addition, the ovens that must be used to cure such a rotor are large and are expensive to construct and maintain. In addition, such ovens generally require large amount of energy. Moreover, the fiberglass may not prevent circumferential movement of the magnetic blocks with respect to the rotor.

DE 10 2005 040 389 relates to an electric drive having a bell-shaped armature and external permanent magnet elements.

In one aspect according to the present invention, a permanent magnet rotor assembly in accordance with the appended claims is provided.

Various aspects and embodiments of the present invention will now be described in connection with the accompanying drawings, in which:
Figure 1 is a perspective view of a portion of an exemplary permanent magnet rotor assembly including a rotor and a plurality of permanent magnet pole assemblies coupled thereto.
Figure 2 is a cross sectional view of one of the permanent magnet pole assemblies shown in Figure 1, removed from the rotor, and including a plurality of encapsulating elements.
Figure 3 is a perspective view of the permanent magnet pole assembly shown in Figure 2 wherein one of the encapsulating elements is semi-transparent.
Figure 4 is a perspective view of the permanent magnetic pole assembly shown in Figure 2 and with one of the encapsulating elements and two of the magnetic blocks removed.

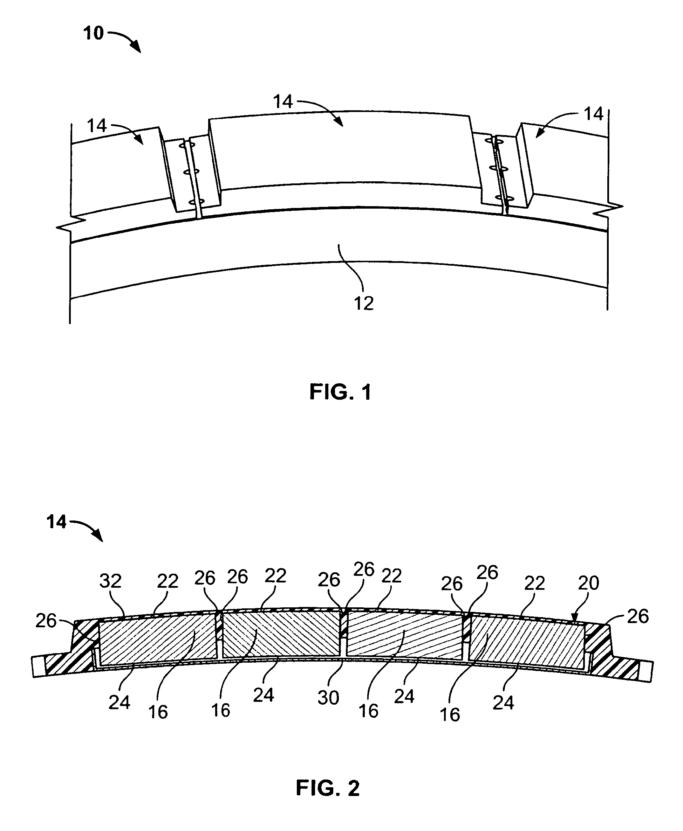

Figure 1 is a perspective view of a portion of an exemplary permanent magnet rotor assembly 10 for an electrical machine (not shown). In the exemplary embodiment, magnet rotor assembly 10 includes a rotor 12 and a plurality of permanent magnet pole assemblies 14 that are each coupled to rotor 12. In the exemplary embodiment, each permanent magnet pole assembly 14 is coupled to rotor 12 using a plurality of mechanical fasteners (not shown), such as, but not limited to, bolts. Alternatively, assemblies 14 can be coupled to rotor 12 using any other known coupling method, such as but not limited to bonding or clamping. Moreover, in the exemplary embodiment, magnet rotor assemblies 14 are suitable for use with large diameter electric machines, such as, for example, high pole count electric machines that are useful for low/medium speed drives, such as direct-drive multi-megawatt wind generators. As defined herein a large diameter machine uses a rotor having a diameter of approximately 0.61 m (two feet) or larger. It should be understood by one of ordinary skill in the art, however, that magnet rotor assemblies 14 can be used with other types of electric machines without departing from the scope of the invention. For example, permanent magnet pole assemblies 14 can be used in single and/or double-sided rotors, and in both inner-rotor and outer-rotor topologies.

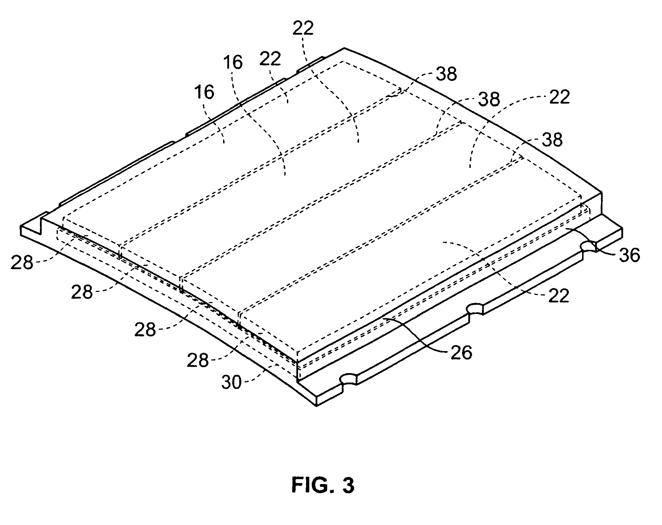

Figure 2 is a cross sectional view of one permanent magnet pole assembly 14 removed from rotor 12. In the exemplary embodiment, each permanent magnetic pole assembly 14 includes a plurality of magnetic blocks 16 and an encapsulating member 20 that substantially encapsulates each magnetic block 16 to facilitate preventing blocks 16 from corroding. Moreover, in the exemplary embodiment, each permanent magnetic pole assembly 14 includes four magnetic blocks 16. Alternatively, pole assembly 14 may include more or less than four magnetic blocks 16. In the exemplary embodiment, each magnetic block 16 includes a top 22, a bottom 24, two sides 26 and two opposite ends 28 (shown in Figure 3). Moreover, in the exemplary embodiment, each top 22, bottom 24, side 26 and end 28 of magnetic blocks 16 is substantially planar. It is contemplated, however, that the magnetic blocks 16 can be fabricated with a bottom 24 that is contoured with a shape that substantially matches the contour of an outer surface of rotor 12 (shown in Figure 1). Alternatively, the number, size, and shape of magnetic blocks 16 are variably selected, based on the size of rotor 12 and the anticipated electrical losses in magnetic blocks 16. Moreover, as should be appreciated by one of ordinary skill in the art, magnetic blocks 16 can have any shape that enables assembly 14 to function as described herein. For example, smaller magnetic blocks generally have lower electrical losses per unit area (loss densities) than larger magnetic blocks.

In the exemplary embodiment, encapsulating member 20 includes a first encapsulating element 30 and a second encapsulating element 32 that extends from first encapsulating element 30. First and second encapsulating elements 30 and 32, respectively, cooperative to form a protective cover that substantially encapsulates magnetic blocks 16 and shields each magnetic block 16 from the environment to facilitate preventing or minimizing corrosion of magnetic blocks 16. In the exemplary embodiment, first encapsulating element 30 underlies magnetic blocks 16, and second encapsulating element 32 overlies the magnetic block 16. Alternatively, first and second elements 30 and 32, respectively, could be arranged in any orientation or configuration that enables encapsulating member 20 to function as described herein. Moreover, in alternative embodiments, encapsulating member 20 includes more than two elements 30 and 32.

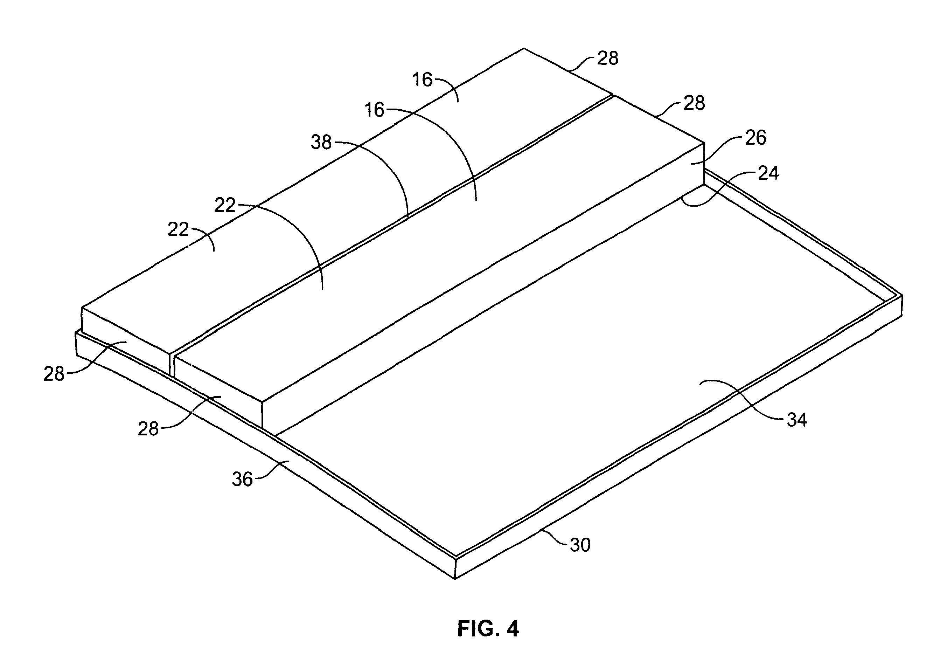

Figure 3 is a perspective view of pole assembly 14 with second encapsulating element 32 being fabricated from a semi-transparent material. Figure 4 is a perspective view of assembly 14 with element 32 and two magnetic blocks 16 each removed. In the exemplary embodiment, first encapsulating element 30 is a tray that has a base 34 and a periphery flange 36 that extends upward from an outer periphery of base 34. Periphery flange 36 may be formed by bending edges of base 34 upward to form a flange that extends about the perimeter of the base. In the exemplary embodiment, element 30 is sized and shaped to receive magnetic blocks 16 in side-by-side relationship such that an optional gap 38 is defined between each pair of adjacent magnetic blocks 16. Specifically, in the exemplary embodiment, magnetic blocks 16 are positioned on tray base 34 such that each block bottom 24 is oriented in a substantial face-to-face engagement against the tray. In the exemplary embodiment, the tray is sized to receive four magnetic blocks 16 such that periphery flange 36 extends around the four blocks 16. As illustrated best in Figure 1, in the exemplary embodiment, a lower surface of tray base 34 is contoured with a shape that enables the tray to substantially conform to the contoured outer surface of the rotor 12 to which the permanent magnetic pole assembly 14 is mounted.

In the exemplary embodiment, the tray is fabricated from a metallic material and first encapsulating element 30 has a greater corrosion resistance than that of the magnetic blocks 16. For example, in one embodiment, first encapsulating element 30 is fabricated from a ferromagnetic sheet steel. Alternatively, other types of metallic materials can be used to fabricate first encapsulating element 30.

In the exemplary embodiment, second encapsulating element 32 is fabricated from a fiber-reinforced polymer that extends from first encapsulating element 30. More specifically, in the exemplary embodiment, the fiber-reinforced polymer is molded onto first encapsulating element 30 and onto magnetic blocks 16 such that blocks 16 are encapsulated by element 30. Moreover, in the exemplary embodiment, the fiber-reinforced polymer extends over and covers the top 22, sides 26, and ends 28 of each magnetic block 16. As a result, element 30 substantially seals each gap 38 defined between each adjacent pair of magnetic blocks 16. Alternatively, second encapsulating element 32 can be coupled to, or extend from, element 30 in other ways besides being molded directly to first encapsulating element 30 and magnetic blocks 16. A thickness of the fiber-reinforced polymer between adjacent magnetic blocks 16, and an airgap of the electric machine (not shown) is preferably as thin as is allowed by mechanical requirements to facilitate maximizing the efficiency of the magnetic flux paths defined within pole assembly 14. Suitable polymers for use in the fiber-reinforced polymer of second encapsulating element 32 include, but are not limited to only including, polyamide, polyurethane, polyester, vinyl, nylon, polycarbonate, and/or epoxy. The fiber-reinforced polymer may also be a laminate. In another embodiment, second encapsulating element 32 is formed from a polymer and does not include fiber reinforcement.

Because encapsulating member 20 completely encapsulates magnetic blocks 16, magnetic blocks 16 are substantially protected from environmental conditions that may cause corrosion. The improved corrosion protection facilitates increasing the reliability and useful life of the electric machine. For example, known wind turbine generators having large diameter rotors generally have enclosures ratings of IP54 as set forth by the International Electrotechnical Commission's (IEC)'s standard 60529. The enclosure rating is a rating of the degree of protection provided by such enclosures. Permanent magnetic pole assemblies 14 fabricated in accordance with the present invention potentially enable an enclosure to be used that has less stringent requirements, such as an enclosure rating of IP23, without sacrificing any level of protection. As such, such enclosures facilitate the use of a wind turbine generator that is less costly to manufacture, to maintain, and to operate as compared to known wind turbine generators that use enclosures that have a greater enclosure rating.

Permanent magnetic pole assemblies 14 can be manufactured by initially providing first encapsulating element 30, and then positioning at least one magnetic block 16 within first encapsulating element 30. Second encapsulating element 32 is then coupled to, or extended from, first encapsulating element 30. As described above, first and second encapsulating elements 30 and 32, respectively, cooperate to completely encapsulate magnetic blocks 16 such that blocks 16 are substantially shielded from environmental conditions that may cause corrosion. In the exemplary embodiments described herein, magnetic blocks 16 are positioned within a generally, flat (or contoured) tray such that adjacent blocks 16 are in a side-by-side relationship with each other, and are in substantial face-to-face contact with the tray. The bottom of the tray is contoured with a shape that substantially mirrors the contour of the outer surface of the rotor 12. In the exemplary embodiment, second encapsulating element 32 extends from, and is coupled to, the first encapsulating element 30 through a molding process in which a fiber-reinforced polymer is extruded over each magnetic block 16 and over first encapsulating element 30.

The encapsulating member 20 as described herein facilitates the prevention of magnetic blocks 16 from corrosion. More specifically, the encapsulating member 20, as described above, substantially encapsulates the magnetic blocks 16 and shields each magnetic block 16 from the environment.

The methods, apparatus, and systems are not limited to the specific embodiments described herein or to the specific illustrated encapsulating member.

While the invention has been described in terms of various specific embodiments, those skilled in the art will recognize that the invention can be practiced with modification within the scope of the claims.

## Claims

1. A permanent magnet rotor assembly (10) for use with a wind turbine, said rotor assembly comprising:
a rotor (12) having a diameter of 60 cm or larger; and
a plurality of permanent magnet pole assemblies (14) coupled to said rotor (12), each of said permanent magnet pole assemblies (14) comprising a plurality of magnetic blocks (16) and an encapsulating member (20) that substantially encapsulates said magnetic blocks (16);
said encapsulating members (20) respectively comprising a first encapsulating element (30) and a second encapsulating element (32) extending from said first encapsulating element (30) wherein said first encapsulating element (30) is a tray that comprises a base (34) and a periphery flange (36) that extends upwards from an outer periphery of the base (34), wherein said magnetic blocks (16) are positioned on the base (34) such that respective bottoms (24) thereof are oriented in a substantial face-to-face arrangement against the tray (34), wherein said tray (34) comprises a ferromagnetic sheet of material, and wherein said second encapsulating element (32) comprises a semi-transparent reinforced plastic material.

2. A permanent magnet rotor assembly (10) in accordance with Claim 1, wherein said second encapsulating element (32) is fabricated from at least one of polyamide, polyurethane, polyester, vinyl, nylon, polycarbonate, and epoxy.

## Patentansprüche

1. Permanentmagnet-Rotoranordnung (10) zur Verwendung mit einer Windturbine, wobei die Rotoranordnung Folgendes umfasst:
einen Rotor (12) mit einem Durchmesser von 60 cm oder größer; und
mehrere mit dem Rotor (12) gekoppelte Permanentmagnetpolbaugruppen (14), wobei jede der Permanentmagnetpolbaugruppen (14) mehrere Magnetblöcke (16) sowie ein umschließendes Element (20) umfasst, das die Magnetblöcke (16) im Wesentlichen umschließt;
wobei die umschließenden Elemente (20) jeweils ein erstes umschließendes Element (30) aufweisen sowie ein zweites umschließendes Element (32), das sich von dem ersten umschließendes Element (30) erstreckt, wobei das erste umschließende Element (30) eine Schale ist, die eine Basis (34) und einen randständigen Flansch (36) umfasst, der sich von einem äußeren Rand der Basis (34) nach oben erstreckt, wobei die Magnetblöcke (16) so auf der Basis (34) angeordnet sind, dass deren jeweilige Böden (24) im Wesentlichen der Schale (34) gegenüberliegend ausgerichtet sind, wobei die Schale (34) ein ferromagnetisches Plattenmaterial umfasst und wobei das zweite umschließende Element (32) ein halbtransparentes verstärktes Kunststoffmaterial umfasst.

2. Permanentmagnet-Rotoranordnung (10) nach Anspruch 1, wobei das zweite umschließende Element (32) aus mindestens einem der Folgenden gefertigt ist: Polyamid, Polyurethan, Polyester, Vinyl, Nylon, Polycarbonat und Epoxy.

## Revendications

1. Un ensemble rotor à aimants permanents (10) destiné à être utilisé avec une éolienne, ledit ensemble rotor comprenant :
un rotor (12) ayant un diamètre de 60 cm ou plus ; et
une pluralité d'ensembles de pôles à aimants permanents (14) couplés audit rotor (12), chacun desdits ensembles de pôles à aimants permanents (14) comprenant une pluralités de blocs magnétiques (16) et un membre d'encapsulation (20) qui encapsule substantiellement lesdits blocs magnétiques (16) ;
lesdits membres d'encapsulation (20) comprenant respectivement un premier élément d'encapsulation (30) et un second élément d'encapsulation (32) s'étendant depuis ledit premier élément d'encapsulation (30) dans lequel ledit premier élément d'encapsulation (30) est un plateau qui comprend une base (34) et une bride de périphérie (36) qui s'étend vers le haut depuis une périphérie extérieure de la base (34), dans lequel lesdits blocs magnétiques (16) sont positionnés sur la base (34) de telle façon que leurs fonds (24) respectifs sont orientés selon un agencement substantiellement face à face contre le plateau (34), dans lequel le plateau (34) comprend une feuille ferromagnétique de matériau, et dans lequel ledit second élément d'encapsulation (32) comprend un matériau plastique renforcé semi-transparent.

2. Un ensemble rotor à aimants permanents (10) selon la revendication 1, dans lequel ledit second élément d'encapsulation (32) est fabriqué à partir d'au moins un de polyamide, polyuréthane, polyester, vinyle, nylon, polycarbonate, et époxy.
